(19) Europäisches Patentamt / European Patent Office / Office européen des brevets

(11) **EP 2 260 359 B1**

(12) **FASCICULE DE BREVET EUROPEEN**

(45) Date de publication et mention
de la délivrance du brevet:
**23.01.2013 Bulletin 2013/04**

(21) Numéro de dépôt: **09721897.8**

(22) Date de dépôt: **06.03.2009**

(51) Int Cl.:
*G05D 1/00* (2006.01)          *B64C 25/42* (2006.01)
*B64C 25/48* (2006.01)

(86) Numéro de dépôt international:
**PCT/EP2009/001762**

(87) Numéro de publication internationale:
**WO 2009/115224 (24.09.2009 Gazette 2009/39)**

(54) **PROCEDE ET DISPOSITIF DE PILOTAGE LATERAL D'UN AERONEF ROULANT AU SOL**

VERFAHREN UND VORRICHTUNG ZUR SEITLICHEN STEUERUNG EINES ROLLENDEN FLUGZEUGS

METHOD AND DEVICE FOR THE LATERAL CONTROL OF A TAXIING AIRCRAFT

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **18.03.2008 FR 0801472**

(43) Date de publication de la demande:
**15.12.2010 Bulletin 2010/50**

(73) Titulaires:
• **AIRBUS OPERATIONS (SAS)**
**31060 Toulouse (FR)**
• **AIRBUS OPERATIONS LIMITED**
**Filton**
**Bristol**
**BS99 7AR (GB)**

(72) Inventeurs:
• **CHATRENET, Dominique**
**F-31700 Cornebarrieu (FR)**
• **VILLAUMÉ, Fabrice**
**F-31600 Seysses (FR)**
• **BOURISSOU, Céline**
**F-31830 Plaisance du Touch (FR)**
• **SCACCHI, Pierre**
**F-31300 Toulouse (FR)**
• **ROMANA, Louis-Emmanuel**
**Bristol BS 10 6RR (GB)**

(74) Mandataire: **Hauer, Bernard et al**
**Gevers France**
**41, avenue de Friedland**
**75008 Paris (FR)**

(56) Documents cités:
**EP-A- 1 477 872      WO-A-2006/134257**
**FR-A- 2 371 725      FR-A- 2 898 334**
**US-A- 4 482 961      US-A1- 2006 186 267**

**Description**

La présente invention concerne un procédé et un dispositif de pilotage latéral d'un aéronef roulant au sol, en particulier sur un aéroport.

La présente invention s'applique au roulage d'un aéronef au sol, en particulier d'un avion, civil ou militaire, de transport de passagers ou de marchandises (fret), ou encore d'un drone. Elle concerne plus particulièrement la génération d'un moment de lacet (selon l'axe vertical de l'aéronef) permettant le contrôle latéral de l'aéronef roulant au sol.

Dans le cadre de la présente invention, on entend par roulage au sol, tout type de roulage possible d'un aéronef, tel que le roulage sur une piste d'atterrissage au cours de phases d'atterrissage et de décollage, ou le roulage sur des voies de circulation ou sur des aires de manoeuvres, notamment.

Actuellement, le pilote contrôle les mouvements latéraux de l'aéronef au sol à l'aide d'organes de pilotage manuels (par exemple un volant permettant l'orientation de la roulette du train d'atterrissage avant, une manette de contrôle de la poussée des moteurs, des pédales de freins, un palonnier de direction), le long d'une trajectoire au sol. Ces organes de pilotage permettent de commander des actionneurs de l'aéronef capables d'influencer les mouvements latéraux de l'aéronef, essentiellement par l'intermédiaire de l'orientation de la roulette avant (et éventuellement de l'orientation des trains arrière) et de la gouverne de direction de la dérive, et plus rarement par une utilisation dissymétrique des moteurs et des freins.

Dans le cadre de la présente invention, on entend par roulette avant un ensemble mécanique qui est muni d'au moins une roue, qui est situé à l'avant de l'aéronef, qui fait de préférence partie d'un train d'atterrissage avant de l'aéronef, et qui est orientable de manière à pouvoir déplacer latéralement l'aéronef lorsque ce dernier roule au sol.

Actuellement, en cas de panne du système d'orientation de la roulette avant (par exemple en cas de perte du circuit hydraulique alimentant l'actionneur responsable de l'orientation, en cas de panne de l'actionneur lui-même, ou bien en cas de perte de la transmission de données entre le calculateur commandant l'actionneur et celui-ci), l'aéronef ne peut plus être contrôlé latéralement à l'aide des organes de pilotage usuels (volant, palonnier), et ce notamment à basse vitesse, lorsque la gouverne de direction n'a plus d'effet significatif sur le moment de lacet de l'aéronef.

Parfois, ces types de panne se produisent en vol ou après le décollage, ce qui peut rendre la phase d'atterrissage périlleuse. En cas de perte du contrôle de la roulette avant, l'atterrissage ne peut plus être effectué par un système de pilotage automatique, et le pilote ne peut plus utiliser que la gouverne de direction, ainsi qu'éventuellement les freins de manière dissymétrique grâce aux pédales de freins, manoeuvre à laquelle le pilote n'est toutefois pas habitué. Cette situation peut se révéler délicate, voire dangereuse, et conduire à une sortie de piste à plus ou moins grande vitesse si le pilote ne parvient pas à contrôler correctement l'aéronef (par exemple en raison d'un vent de travers, d'une panne d'un moteur, ...), ce qui peut entraîner des pertes ou dommages humains et/ou matériels.

Une fois l'aéronef arrêté en bout de piste, il est toujours possible de contrôler latéralement celui-ci en utilisant les freins et/ou les moteurs de manière dissymétrique, et ceci afin de dégager rapidement la piste et de la rendre disponible pour les aéronefs souhaitant atterrir ou décoller. Cependant, la consigne opérationnelle des compagnies aériennes consiste généralement à contraindre le pilote, compte tenu du pilotage délicat et potentiellement dangereux que suppose l'utilisation manuelle dissymétrique des freins et/ou des moteurs, de faire appel au contrôle du trafic sol afin d'envoyer un tracteur qui va remorquer l'aéronef du bout de la piste vers une zone dégagée de l'aéroport (voie de relation, porte de débarquement, ...). En effet, le contrôle latéral manuel d'un aéronef utilisant exclusivement l'usage dissymétrique des freins et des moteurs peut se révéler particulièrement difficile pour un pilote non aguerri à ce type de manoeuvre, d'autant plus que le pilotage peut s'avérer déjà délicat pour les aéronefs de grande taille (par exemple de type AIRBUS A340-600 ou A380) lorsque la roulette avant fonctionne correctement (nécessité d'utiliser une caméra extérieure dans les virages serrés).

Durant le temps d'attente du tracteur et le temps de remorquage, l'aéronef bloque donc la piste et perturbe par conséquent le trafic au sol (attente des aéronefs souhaitant décoller, modification de la trajectoire des aéronefs au sol si leur cheminement est impacté par l'aéronef remorqué), ainsi que le trafic aérien (possibles déroutements vers d'autres aéroports d'aéronefs qui se trouvaient en approche, retard au décollage des aéronefs en attente de la libération de la piste). Cette situation entraîne des retards potentiellement importants, à la fois pour l'aéronef en panne et pour les aéronefs impactés par la perturbation du trafic aérien et du trafic au sol. Ces retards représentent des coûts importants pour les compagnies (en particulier le dédommagement financier et matériel des passagers, notamment en cas de déroutement d'aéronefs).

Par ailleurs, l'aéronef est immobilisé au sol le temps de la réparation de la panne. Cette immobilisation peut être particulièrement longue si les pièces de rechange ne sont pas disponibles à l'aéroport, ou si la réparation ne peut être effectuée facilement sur place, en particulier si l'aéroport est isolé (ou s'il se situe dans un pays éloigné). Les coûts d'immobilisation d'un aéronef sont donc particulièrement importants, notamment s'il faut acheminer l'équipement de rechange d'un endroit éloigné, ou s'il faut affréter un aéronef supplémentaire pour assurer la liaison aérienne et/ou le rapatriement des passagers.

Par ailleurs, on connaît :

- par le document FR-2 898 334, un procédé de répartition du freinage entre les freins d'un aéronef. Ce document prévoit d'estimer un objectif d'effort de freinage et un objectif de couple de lacet à réaliser par les freins de l'aéronef, de définir au moins deux groupes de freins, et de déterminer pour chaque groupe de freins un niveau de freinage à réaliser par ce groupe, ce niveau de freinage étant calculé de sorte qu'un freinage réalisé soit conforme audit objectif d'effort de freinage et audit objectif de couple de lacet ;
- par le document EP-1 477 872, un dispositif de pilotage d'un aéronef qui comprend des moyens pour engendrer des ordres de commande de gouvernes susceptibles d'agir sur le mouvement de lacet de l'aéronef, et notamment l'orientation des roues du train d'atterrissage avant, la commande dissymétrique de moyens de freinage et la commande dissymétrique de moteurs. Ce dispositif de pilotage comporte également une unité centrale pour déterminer un moment global devant être appliqué à l'aéronef selon l'axe de lacet pour que l'aéronef réalise des consignes de rotation, et des moyens pour répartir ce moment global en moments élémentaires à appliquer aux différentes gouvernes. La consigne de rotation peut également correspondre à l'actionnement d'un volant de commande de l'orientation des roues du train d'atterrissage avant ; et
- par le document US-4 482 961, un système pour contrôler automatiquement la direction d'un aéronef lors du roulage au sol après un atterrissage, afin de maintenir l'aéronef dans les limites latérales de la piste d'atterrissage.

La présente invention concerne un procédé de pilotage latéral d'un aéronef, en particulier d'un avion de transport, civil ou militaire, roulant au sol, ledit aéronef étant muni d'une roulette avant orientable, ledit procédé de pilotage permettant de remédier aux inconvénients précités.

Le procédé selon l'invention est décrit dans la revendication 1.

Ainsi, le procédé conforme à l'invention permet de contrôler l'aéronef au sol selon l'axe latéral, notamment en cas de perte de contrôle de la roulette avant. En particulier, ledit procédé est en mesure d'assurer un contrôle directionnel minimal permettant au pilote de pouvoir, au moins, dégager rapidement la piste d'atterrissage lorsque le système d'orientation de la roulette avant de l'aéronef ne fonctionne plus correctement, et ceci en utilisant les freins et/ou les moteurs de manière dissymétrique.

Par ailleurs, pour engendrer lesdits ordres de commande, on utilise les mêmes organes de pilotage que dans le cas nominal (cas où le système d'orientation de la roulette avant fonctionne correctement), à savoir actuellement les volants et les palonniers. Bien entendu, d'autres organes de pilotage, existants ou non, peuvent être utilisés pour le contrôle manuel de cette fonction, par exemple des organes permettant le pilotage latéral par objectif de vitesse de lacet. Dans tous les cas, le pilote ne fait pas usage des pédales de frein et/ou des manettes de poussée des moteurs pour le contrôle latéral de l'aéronef conformément au mode de réalisation de base précité du procédé selon l'invention.

En outre, grâce à ce procédé, le comportement de l'aéronef (en terme de dynamique et de ressenti du point de vue du pilote) est très similaire à celui du cas nominal. Comme il utilise également les mêmes organes de pilotage que le cas nominal, l'utilisation de cette fonction est, par conséquent, pratiquement transparente pour le pilote, qui peut alors conserver ses habitudes de pilotage manuel pour les manoeuvres au sol nécessitant normalement la roulette avant. Il en résulte que la mise en oeuvre de la présente invention ne nécessite pas de temps d'adaptation de la part du pilote, et que celui-ci ne sera donc pas surpris par le comportement de la fonction conforme à l'invention qui peut prendre automatiquement le relais du contrôle latéral habituel de l'aéronef, dans un mode de réalisation particulier précisé ci-dessous, en cas de panne brusque du système d'orientation de la roulette avant. Ceci rend la phase d'atterrissage manuelle beaucoup plus sûre, car le pilote peut contrôler l'aéronef exactement comme il le ferait dans le cas nominal, réduisant ainsi sa charge de travail et son stress au cours d'une manoeuvre demandant beaucoup d'attention.

Par ailleurs, la mise en oeuvre du procédé conforme à l'invention peut être commandé aussi bien manuellement par un pilote humain (via les organes de pilotage habituels ou futurs) que de manière automatique par un système de pilotage automatique usuel. Par conséquent, il est possible de conserver le système de pilotage automatique pour toutes les fonctions automatiques au sol existantes (atterrissage automatique ou partiellement automatique) que futures (décollage automatique ou partiellement automatique, roulement automatique ou partiellement automatique).

Par ailleurs, l'aéronef n'est plus dépendant d'une aide extérieure (telle qu'un tracteur) pour dégager la piste après l'atterrissage. Par conséquent, le trafic aérien environnant n'est pas perturbé.

De même, l'aéronef n'est plus dépendant d'une aide extérieure (tracteur) pour rejoindre la porte de débarquement. Il peut réaliser cette manoeuvre de manière autonome. Par conséquent, le trafic au sol n'est pas perturbé, et l'aéronef n'est plus responsable des retards habituellement dus à une panne du système d'orientation de la roulette avant, à l'origine de coûts importants pour les compagnies aériennes.

Grâce à la présente invention, on peut également envisager de faire repartir l'aéronef (avec ou sans passagers et/ou fret), même lorsqu'une panne du système d'orientation de la roulette avant est toujours présente. In en résulte que l'aéronef n'est plus immobilisé au sol en raison d'un délai de réparation ou d'un acheminement de pièces ou équipements de rechange. Par conséquent, la réparation peut être effectuée de manière beaucoup plus souple, puisque les principales contraintes d'espace (l'aéronef peut rejoindre un autre aéroport pour y être réparé) et de temps (l'aéronef peut être réparé plus tard) disparaissent.

La mise en oeuvre du procédé selon l'invention ne nécessite pas de temps d'adaptation de la part du pilote. Le pilote ne sera donc pas surpris par le comportement de la fonction, qui prend le relais du contrôle latéral de l'aéronef, en cas de panne brusque du système d'orientation de la roulette avant. Ceci rend la phase d'atterrissage manuelle beaucoup plus sûre, car le pilote peut contrôler l'aéronef exactement comme il le ferait dans le cas nominal, ce qui réduit sa charge de travail et son stress au cours d'une manoeuvre demandant beaucoup d'attention.

En outre, dans un mode de réalisation particulier :

- on reçoit un ordre global de commande du moment de lacet de l'aéronef roulant au sol ;
- on répartit automatiquement cet ordre global :

    • en ordres de commande relatifs à la commande de l'orientation de la roulette avant ; et
    • en ordres auxiliaires ;

- pour lesdits ordres de commande, on met en oeuvre lesdites étapes a) à d) ; et
- on applique automatiquement lesdits ordres auxiliaires à des moyens auxiliaires susceptibles d'agir sur le mouvement latéral de l'aéronef.

Dans ce mode de réalisation particulier, la mise en oeuvre [des étapes a) à d)] du procédé conforme à la présente invention peut être vue comme un moyen d'actionnement supplémentaire permettant de contrôler latéralement l'aéronef. Ce mode de réalisation particulier peut être utilisé pour répartir les efforts nécessaires à la création du moment de lacet sur différents actionneurs, tels que le système d'orientation de la roulette avant, la gouverne de direction, l'utilisation dissymétrique des freins, et l'utilisation dissymétrique des moteurs.

Grâce à l'invention, on peut utiliser le freinage et/ou la poussée dissymétrique en complément et/ou en remplacement des autres actionneurs influant les mouvements latéraux de l'aéronef, et ce même en l'absence de panne de l'un ou de plusieurs de ces actionneurs.

Par ailleurs, dans un mode de réalisation particulier :

- on reçoit, de plus, des seconds ordres pour commander ledit ensemble de commande, en particulier ledit ensemble de freins, lesdits seconds ordres étant engendrés de façon usuelle ;
- on détermine à partir de ces seconds ordres et desdits premiers ordres des ordres globaux ; et
- à l'étape d), on applique audit ensemble de commande lesdits ordres globaux obtenus à partir desdits premiers et seconds ordres.

Ainsi, la mise en oeuvre du procédé conforme à l'invention n'exclut pas une utilisation habituelle dudit ensemble de moteurs et/ou dudit ensemble de freins par le pilote, qui peut actionner ces ensembles à l'aide de ses organes de pilotage usuels, afin d'engendrer des seconds ordres qui sont alors pris en compte comme indiqué dans le mode de réalisation précédent. Par conséquent, grâce à ce mode de réalisation particulier, le pilote conserve notamment la capacité de freiner, à l'aide de ses pédales de freins.

En outre de façon avantageuse, on détermine des premiers ordres comprenant à la fois des ordres pour ledit ensemble de freins et des ordres pour ledit ensemble de moteurs, et à l'étape d), on applique ces ordres respectivement audit ensemble de freins et audit ensemble de moteurs.

Par ailleurs, de façon avantageuse, avant d'appliquer lesdits premiers ordres audit ensemble de commande, on limite ces premiers ordres à des valeurs maximales si elles sont supérieures à ces dernières.

La présente invention concerne également un dispositif de pilotage latéral d'un aéronef, en particulier d'un avion de transport, roulant au sol, ledit aéronef étant muni d'une roulette avant orientable.

Le dispositif selon l'invention est défini dans la revendication 7.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention dans un mode de réalisation de base.
Les figures 2 et 3 représentent schématiquement des modes de réalisation particuliers d'un dispositif conforme à l'invention.
La figure 4 illustre schématiquement une unité de calcul d'un dispositif conforme à l'invention.
La figure 5 est le schéma synoptique d'un mode de réalisation préféré de moyens de calcul de l'unité de calcul de la figure 4.

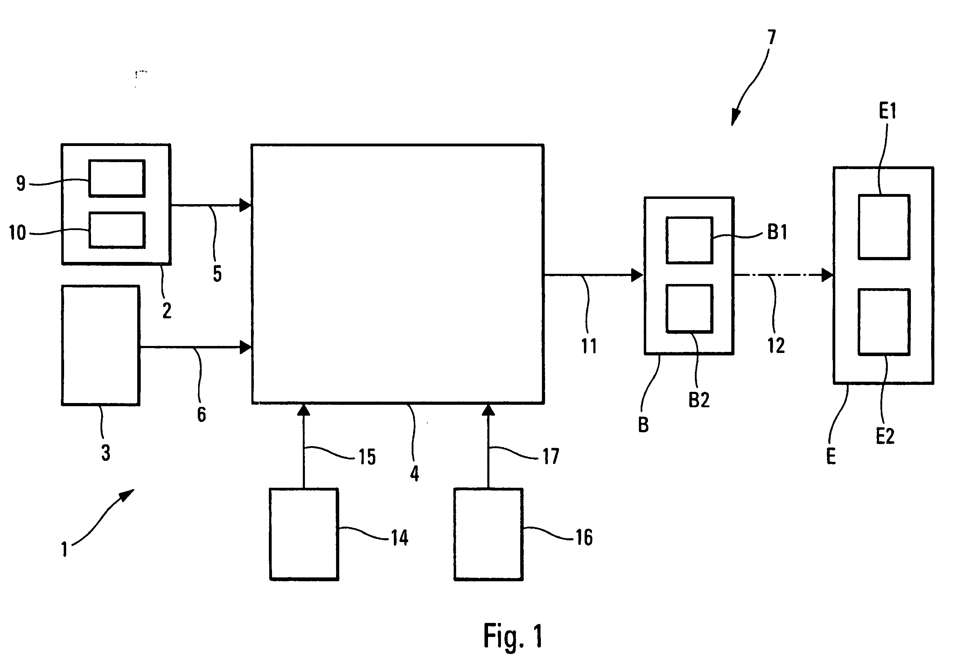

Le dispositif 1 conforme à l'invention et représenté schématiquement sur la figure 1 est destiné au pilotage latéral d'un aéronef, non représenté, qui roule au sol, en particulier sur un aéroport. Cet aéronef peut être en particulier un avion, civil ou militaire, de transport de passagers ou de marchandises (fret), ou un drone.

Le dispositif 1 est relatif, plus particulièrement, à la génération d'un moment de lacet (selon l'axe vertical de l'aéronef) permettant le contrôle latéral de l'aéronef roulant au sol. Dans le cadre de la présente invention, on entend par roulage au sol, tout type de roulage possible de l'aéronef, tel que le roulage sur une piste d'atterrissage au cours de phases d'atterrissage et de décollage, ou le roulage sur des voies de circulation ou sur des aires de manoeuvres, notamment.

Selon l'invention, ledit dispositif 1 comporte, comme représenté sur la figure 1 :

- des moyens 2 précisés ci-dessous, pour engendrer des ordres de commande relatifs à la commande de l'orientation de la roulette avant (non représentée) de l'aéronef. Dans le cadre de la présente invention, on entend par roulette avant un ensemble mécanique qui est muni d'au moins une roue, qui est agencé à l'avant de l'aéronef, qui fait de préférence partie d'un train d'atterrissage avant de l'aéronef, et qui est orientable de manière à pouvoir déplacer latéralement l'aéronef lorsque ce dernier roule au sol ;
- un ensemble 3 de sources d'informations, qui comporte, notamment, des moyens pour mesurer de façon usuelle la vitesse sol courante de l'aéronef ;
- une unité de calcul 4 qui est reliée par l'intermédiaire de liaisons 5 et 6 respectivement auxdits moyens 2 et audit ensemble 3. Cette unité de calcul 4 est formée de manière à déterminer automatiquement, à partir desdits ordres de commande et de ladite vitesse sol courante, des premiers ordres pour au moins l'un des ensembles de commande suivants : un ensemble de freins E1 de l'aéronef et un ensemble de moteurs E2 de l'aéronef. Chacun desdits ensembles de commande est susceptible d'engendrer un mouvement latéral de l'aéronef autour d'un axe vertical par l'intermédiaire d'une action dissymétrique (par rapport au plan longitudinal de symétrie de aéronef). Lesdits premiers ordres sont déterminés par l'unité de calcul 4 de manière à engendrer sur l'aéronef, lorsqu'ils sont appliqués à l'ensemble de commande correspondant, un mouvement latéral qui est sensiblement identique au mouvement latéral qu'aurait engendrée (de façon usuelle) l'application desdits ordres de commande à un système d'orientation de ladite roulette avant ; et
- des moyens 7 pour appliquer, automatiquement, lesdits premiers ordres audit ensemble de freins E1 et/ou audit ensemble de moteurs E2.

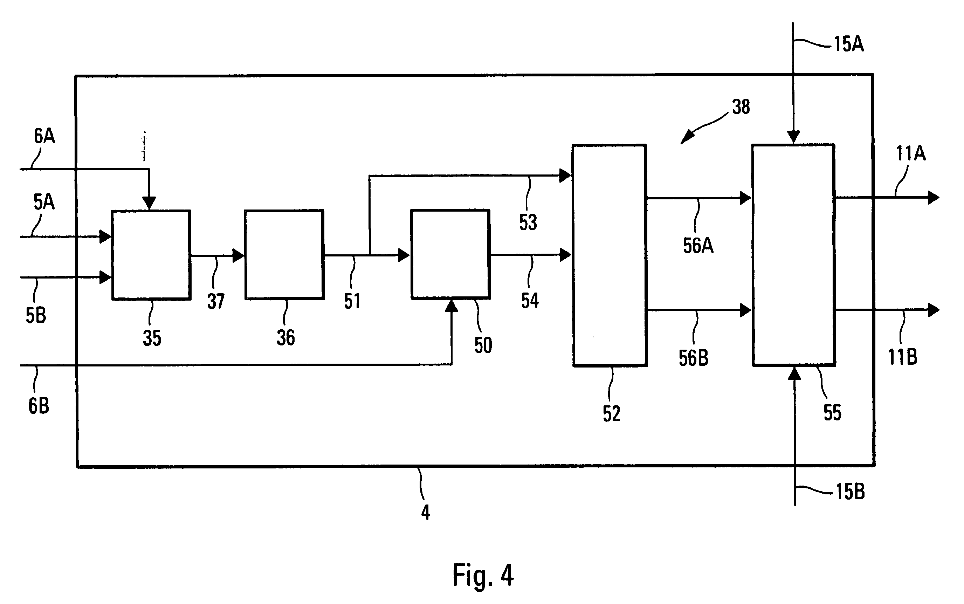

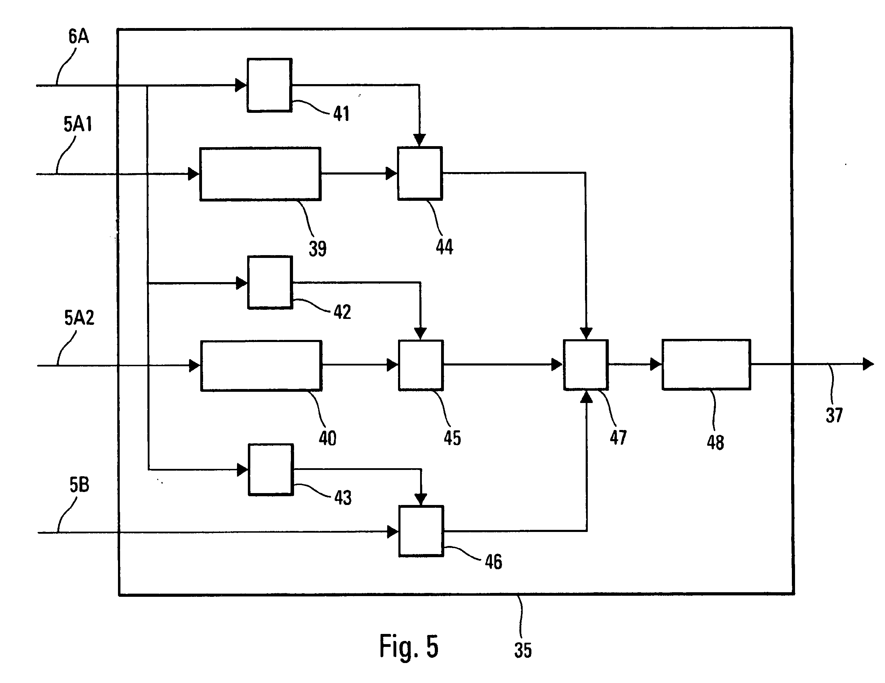

Comme précisé ci-dessous en référence aux figures 4 et 5, ladite unité de calcul 4 comporte des moyens pour, respectivement :

- calculer un angle d'orientation de la roulette avant, qui est représentatif desdits ordres de commande (engendrés par lesdits moyens 2) ;
- calculer la courbure courante d'une trajectoire (de l'aéronef) telle qu'elle serait si ladite roulette avant était orientée suivant cet angle d'orientation ; et
- calculer, à partir au moins de ladite courbure courante et de la vitesse sol courante mesurée, lesdits premiers ordres.

Le dispositif 1 conforme à la présente invention permet donc de contrôler l'aéronef au sol selon l'axe latéral, en particulier en cas de perte du contrôle de la roulette avant, comme précisé ci-dessous. Par conséquent, ledit dispositif 1 est en mesure d'assurer un contrôle directionnel minimal permettant au pilote de pouvoir, au moins, dégager rapidement la piste d'atterrissage lorsque le système d'orientation de la roulette avant de l'aéronef ne fonctionne plus correctement, en utilisant l'ensemble de freins E1 et/ou l'ensemble de moteurs E2, et ceci de manière dissymétrique.

Dans le cadre de la présente invention, lesdits moyens 2 sont, de préférence, des moyens usuels pour engendrer les ordres de commande relatifs à la commande de l'orientation de la roulette avant de l'aéronef. Plus particulièrement, lesdits moyens 2 peuvent comporter :

- des organes de pilotage 9, par exemple un volant, qui permettent à un pilote de l'aéronef d'engendrer de façon manuelle les ordres de commande relatifs à l'orientation de la roulette avant de l'aéronef ; et/ou
- un système de pilotage automatique 10 qui permet d'engendrer automatiquement, de façon usuelle, lesdits ordres de commande concernant l'orientation de la roulette avant.

Par conséquent, le dispositif 1 peut utiliser les mêmes organes de pilotage que dans le cas nominal (cas où le système d'orientation de la roulette avant fonctionne correctement), à savoir actuellement les volants et les palonniers. On notera que d'autres organes de pilotage, existants ou futurs, peuvent être utilisés pour le contrôle manuel de cette fonction, par exemple des organes permettant le pilotage latéral par objectif de vitesse de lacet. Dans tous les cas, le pilote ne fait pas usage des pédales des freins et/ou des manettes de poussée des moteurs pour le contrôle latéral de l'aéronef lors de la mise en oeuvre du mode de réalisation de base précité du dispositif 1.

En outre, grâce audit dispositif 1, le comportement de l'aéronef (en terme de dynamique et de ressenti du point de vue du pilote) est très similaire à celui du cas nominal. Comme il utilise également les mêmes organes de pilotage que le cas nominal, l'utilisation de cette fonction est, par conséquent, pratiquement transparente pour le pilote, qui peut alors conserver ses habitudes de pilotage manuel pour les manoeuvres au sol nécessitant normalement la roulette de nez. Il en résulte que l'utilisation de ce dispositif 1 ne nécessite pas de temps d'adaptation de la part du pilote, et que celui-ci ne sera donc pas surpris par le comportement de la fonction qui prend le relais du contrôle latéral de l'aéronef en cas de panne brusque du système d'orientation du train avant.

Par ailleurs, ledit dispositif 1 peut être commandé aussi bien manuellement par un pilote humain (via les organes de pilotage 9 habituels ou futurs) que de manière automatique par un système de pilotage automatique 10 usuel. Par conséquent, il est possible de conserver le système de pilotage automatique 10 existant sur l'aéronef pour toutes les fonctions automatiques au sol existantes (atterrissage automatique ou partiellement automatique) ou futures (décollage automatique ou partiellement automatique, roulement automatique ou partiellement automatique).

Lesdits moyens 7 qui sont destinés à appliquer lesdits premiers ordres de commande à un ensemble de freins E1 et/ou à un ensemble de moteurs E2 pour qu'ils engendrent une action dissymétrique sur l'aéronef afin d'obtenir un mouvement latéral de ce dernier, comportent :

- un ensemble de commande E qui comprend ledit ensemble de freins E1 et/ou ledit ensemble de moteurs E2 ; et
- un ensemble B de moyens d'actionnement B1 et B2 desdits ensembles E1 et E2, ledit ensemble B recevant lesdits premiers ordres de ladite unité de calcul 4 par l'intermédiaire d'une liaison 11 et les appliquant audit ensemble E, comme illustré par l'intermédiaire d'une liaison 12 en traits mixtes sur la figure 1.

Pour réaliser le pilotage latéral conforme à la présente invention, le dispositif 1 peut donc agir :

- soit sur l'un des ensembles de commande E1 et E2 de l'aéronef, à savoir sur les freins ou sur les moteurs ;
- soit simultanément sur les deux ensembles de commande E1 et E2, c'est-à-dire à la fois sur les freins et sur les moteurs de l'aéronef.

Dans un mode de réalisation particulier, ledit dispositif 1 peut également comporter :

- des moyens de commande usuels 14 des freins dudit ensemble E1, qui sont reliés par l'intermédiaire d'une liaison 15 à l'unité de calcul 4 ; et/ou
- des moyens de commande usuels 16 de l'ensemble E2 de moteurs, qui sont reliés par exemple par l'intermédiaire d'une liaison 17 à ladite unité de calcul 4.

Dans ce cas, dans une application particulière, l'unité de calcul 4 (ou l'ensemble B) reçoit, en plus desdits premiers ordres déterminés par ladite unité de calcul 4, des seconds ordres engendrés par lesdits moyens de commande 14 (et/ou par lesdits moyens de commande 16), et elle détermine, à partir de ces premiers et seconds ordres, des ordres globaux. Dans ce cas, lesdits moyens d'actionnement B1 appliquent le cas échéant les ordres globaux relatifs auxdits freins audit ensemble E1, et lesdits moyens d'actionnement B2 appliquent le cas échéant les ordres globaux relatifs auxdits moteurs audit ensemble E2.

Par conséquent, grâce auxdits moyens de commande 14, en particulier des pédales de frein, et à la prise en compte des (seconds) ordres engendrés par ces moyens de commande 14, le pilote conserve la capacité de freiner. De même, grâce auxdits moyens de commande 16, en particulier des manettes de poussée, et à la prise en compte des (seconds) ordres engendrés par ces moyens de commande 16, le pilote conserve la capacité d'augmenter la poussée de l'aéronef et donc sa vitesse.

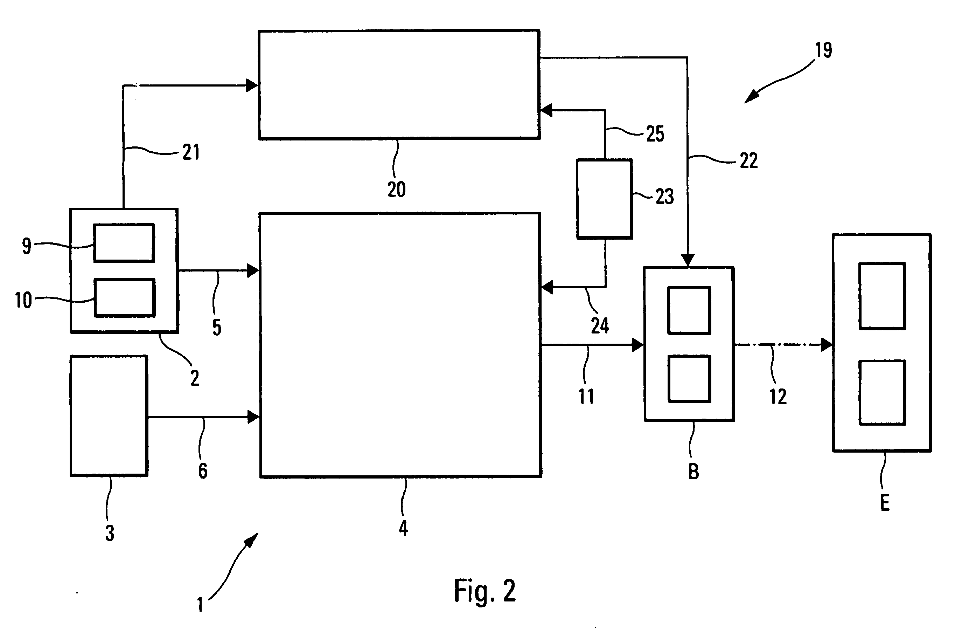

Par ailleurs, dans un mode de réalisation particulier représenté sur la figure 2, ledit dispositif 1 comporte, de plus, un système d'orientation 19 usuel qui est destiné à commander l'orientation de la roulette avant de l'aéronef. Ce système d'orientation 19 comporte :

- une unité de calcul 20 qui reçoit les ordres de commande engendrés par lesdits moyens 2 par l'intermédiaire d'une liaison 21 et qui transmet des ordres d'actionnement correspondant audit ensemble B par l'intermédiaire d'une liaison 22 ; et
- un système de surveillance 23 qui surveille automatiquement ledit système d'orientation 19 de manière à pouvoir détecter une panne de ce dernier.

Dans ce mode de réalisation particulier, ledit dispositif 1 est formé de sorte que :

- tant qu'aucune panne n'est détectée par ledit système de surveillance 23, ledit dispositif 1 applique automatiquement (de façon usuelle) les ordres de commande engendrés par lesdits moyens 2 à la roulette avant via ledit système d'orientation 19, et la mise en oeuvre de l'unité de calcul 4 (et des fonctions précitées conformes à l'invention) est inhibée ; et

- dès qu'une panne est détectée par ledit système de surveillance 23 qui transmet par exemple ses informations par l'intermédiaire de liaisons 24 et 25 auxdites unités de calcul 4 et 20, le dispositif 1 met en oeuvre le contrôle latéral conforme à l'invention, à l'aide de l'unité de calcul 4, et le système d'orientation 19 n'applique plus les ordres de commande engendrés par les moyens 2 à la roulette avant.

La mise en oeuvre de ce mode de réalisation particulier ne nécessite pas de temps d'adaptation de la part du pilote. Le pilote ne sera donc pas surpris par le comportement de la fonction, qui prend le relais du contrôle latéral de l'aéronef, en cas de panne brusque dudit système d'orientation 19 de la roulette avant. La phase d'atterrissage manuelle est rendue ainsi beaucoup plus sûre, car le pilote peut contrôler l'aéronef exactement comme il le ferait dans le cas nominal, ce qui réduit sa charge de travail et son stress au cours d'une manoeuvre demandant beaucoup d'attention.

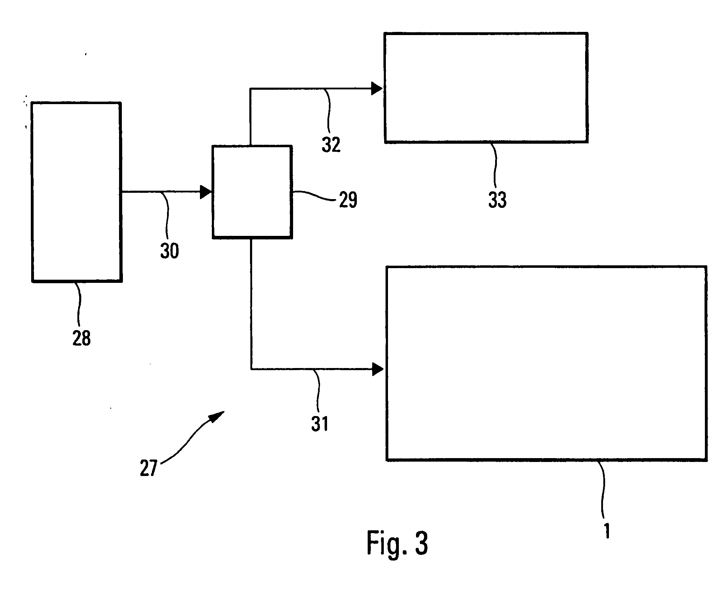

Par ailleurs, ledit dispositif 1 peut faire partie d'un système 27, qui comporte de plus, comme représenté sur la figure 3 :

- des moyens usuels 28 pour engendrer un ordre global de commande du moment de lacet de l'aéronef roulant au sol ; et
- des moyens 29 qui sont reliés par l'intermédiaire d'une liaison 30 auxdits moyens 28 et qui répartissent automatiquement cet ordre global :

  • en ordres de commande relatifs à la commande de l'orientation de la roulette avant, qui sont transmis par l'intermédiaire d'une liaison 31 audit dispositif 1 (qui les applique de la manière décrite ci-dessus) ; et
  • en ordres auxiliaires qui sont transmis par l'intermédiaire d'une liaison 32 à au moins un ensemble 33, par exemple la gouverne de direction de l'aéronef ou le système d'orientation de la roulette avant.

Cet ensemble 33 est formé de manière à appliquer ces ordres auxiliaires à l'aéronef dans le but d'agir sur les mouvements latéraux de l'aéronef.

Dans ce mode de réalisation particulier de la figure 3, le dispositif 1 peut être considéré comme un actionneur supplémentaire permettant de contrôler latéralement l'aéronef. L'objectif du système 27 est alors d'utiliser le freinage et/ou la poussée dissymétrique en complément (et/ou en remplacement) des autres actionneurs (ensemble 33) influant les mouvements latéraux de l'aéronef, et ce même en l'absence de panne de l'un ou de plusieurs de ces actionneurs. Par exemple, ce système 27 peut être utilisé pour répartir les efforts nécessaires à la création du moment de lacet sur différents actionneurs, tels que le système d'orientation de la roulette avant, la gouverne de direction, l'utilisation dissymétrique des freins, et l'utilisation dissymétrique des moteurs.

Comme indiqué précédemment, pour le contrôle latéral de l'aéronef conforme à l'invention, le dispositif 1 peut soit mettre en oeuvre une utilisation dissymétrique de freins, soit mettre en oeuvre une utilisation dissymétrique des moteurs. Dans la description suivante de l'unité de calcul 4, on se limitera à une utilisation dissymétrique des freins.

Dans ce cas, comme représenté sur la figure 4, ladite unité de calcul 4 comporte :

- des moyens 35 pour calculer, à partir d'ordres de commande reçus desdits organes de pilotage manuels 9 par l'intermédiaire d'une liaison 5A et/ou d'ordres de commande reçus dudit système de pilotage automatique 10 par l'intermédiaire d'une liaison 5B, ainsi qu'à partir de mesures reçues dudit ensemble 3 par l'intermédiaire d'une liaison 6A, un angle d'orientation $\beta$ de la roulette avant, qui est représentatif desdits ordres de commande ;
- des moyens 36 qui sont reliés par l'intermédiaire d'une liaison 37 auxdits moyens 35 et qui sont formés de manière à calculer la courbure courante d'une trajectoire de l'aéronef, telle qu'elle serait si ladite roulette avant était orientée selon l'angle d'orientation $\beta$ reçu desdits moyens 35 ; et
- des moyens 38 pour calculer lesdits premiers ordres, à partir de la courbure courante reçue desdits moyens 36, ainsi qu'à partir de mesures précisées ci-dessous, reçues par l'intermédiaire d'une liaison 6B.

Lesdites liaisons 5A et 5B de la figure 4 font partie de la liaison 5 de la figure 1, et lesdites liaisons 6A et 6B font partie de la liaison 6.

Lesdits moyens 35 calculent donc un angle d'orientation $\beta$ de la roulette avant. Cet angle d'orientation $\beta$ est généralement celui qui est envoyé normalement à l'actionneur qui oriente la roulette avant, lorsque celui-ci fonctionne correctement.

Lesdits moyens 35 peuvent être réalisés selon deux modes de réalisation différents. Dans un premier mode de réalisation représenté sur la figure 5, lesdits moyens 35 comportent :

- un moyen 39 qui reçoit, via une liaison 5A1, un ordre de commande qui est issu du volant de l'aéronef, actionné manuellement par le pilote, et qui transforme cet ordre par une première cinématique usuelle ;

- un moyen 40 qui reçoit, via une liaison 5A2, un ordre de commande engendré par le palonnier de l'aéronef, actionné manuellement par le pilote, et qui transforme cet ordre de commande par une seconde cinématique usuelle ;
- des moyens 41, 42 et 43 qui déterminent chacun un facteur de pondération qui dépend de la vitesse sol reçue par l'intermédiaire de la liaison 6A ;
- un moyen 44 pour pondérer le résultat des traitements réalisés par le moyen 39, par le facteur de pondération issu du moyen 41 ;
- un moyen 45 pour pondérer le résultat des traitements réalisés par le moyen 40, par le facteur de pondération issu du moyen 42 ;
- un moyen 46 pour pondérer l'ordre de commande reçu du système de pilotage automatique 10 par l'intermédiaire de la liaison 5B, par le facteur de pondération engendré par le moyen 43 ;
- un moyen 47 pour faire la somme des informations issues respectivement desdits moyens 44, 45 et 46 ; et
- un moyen 48 pour limiter la somme issue dudit moyen 47, ledit moyen 48 fournissant à sa sortie l'angle d'orientation $\beta$ qui est transmis par la liaison 37 auxdits moyens 36.

Dans ce premier mode de réalisation, l'angle d'orientation $\beta$ de la roulette avant est calculé par une loi directe, c'est-à-dire que l'angle $\beta$ est une fonction directe (sans retour) des ordres des organes de pilotage 9 (volant, palonnier, organes futurs par exemple) et/ou du système de pilotage automatique 10. Avec ce premier mode de réalisation, on obtient un ordre $\beta$, qui est une fonction, linéaire ou non, des ordres issus desdits moyens 2.

En outre, dans un second mode de réalisation (non représenté), l'angle $\beta$ est issu d'une loi d'asservissement en lacet, qui permet de commander l'angle $\beta$ de telle sorte que l'aéronef ait une vitesse de lacet qui est fonction des ordres des organes de pilotage 9 (volant, palonnier, organes futurs par exemple) et/ou du système de pilotage automatique 10. Un tel asservissement en vitesse de lacet au sol est notamment décrit dans le brevet français n° 2 854 962.

En outre, lesdits moyens 36 calculent, à l'aide de l'angle d'orientation $\beta$ reçu desdits moyens 35, une courbure équivalente c qui représente la courbure de la trajectoire de l'aéronef telle qu'elle serait si le système d'orientation 19 de la roulette avant fonctionnait correctement et si la roulette avant était orientée d'un angle $\beta$. Lesdits moyens 36 calculent cette courbure c à l'aide de l'expression suivante :

$$c = tg\beta/L$$

dans laquelle :

- L est l'empattement longitudinal de l'aéronef, c'est-à-dire la distance entre l'axe de la roulette avant et le point médian des trains principaux ; et
- tg représente la tangente.

Par ailleurs, lesdits moyens 38 comportent :

- des moyens 50 qui sont reliés par l'intermédiaire d'une liaison 51 auxdits moyens 36 et qui sont formés de manière à calculer une pression commandée P ;
- des moyens 52 qui sont reliés par l'intermédiaire de liaisons 53 et 54 respectivement auxdits moyens 36 et 50 et qui sont formés de manière à déterminer des ordres de pression intermédiaires PsG et PsD à appliquer respectivement à gauche (G) ou à droite (D) ; et
- des moyens 55 qui sont reliés par l'intermédiaire de liaisons 56A et 56B auxdits moyens 52, ainsi que par l'intermédiaire de liaisons 15A et 15B qui font partie de la liaison 15 auxdits moyens de commande 14, et qui sont formés de manière à déterminer des ordres de pression (gauche et droite) PcG et PcD qui doivent être appliqués respectivement aux freins agissant sur le côté gauche et aux freins agissant sur le côté droit de l'aéronef.

Lesdits moyens 50 calculent la pression commandée P à partir de la courbure c reçue desdits moyens 36 par l'intermédiaire de la liaison 51 et de valeurs mesurées reçues dudit ensemble 3 par l'intermédiaire d'une liaison 6B (qui fait partie avec la liaison 6A de ladite liaison 6 de la figure 1). Ces mesures concernent, en particulier, la vitesse sol Vsol, l'état des freins Gf, l'état des pneumatiques Gpn et la contamination de la piste Gpi. Lesdits moyens 50 calculent, en fonction de ces paramètres, une pression commandée P (toujours positive ou nulle) qui est telle que, lorsque l'aéronef est freiné d'un côté par des freins sur lesquels une telle pression commandée est appliquée, la trajectoire de l'aéronef présente une courbure égale à ladite courbure c.

Pour ce faire, dans un premier temps, on cherche une fonction f égale à la courbure c, qui est telle que :

$$c = f(P, Vsol, Gf, Gpn, Gpi)$$

Plusieurs solutions sont envisageables pour déterminer cette fonction f. On peut citer par exemple :

- si le modèle de l'aéronef et de la piste sont connus avec suffisamment de précision, il est possible de déterminer une relation analytique liant la courbure c aux paramètres P, Vsol, Gf, Gpn, Gpi ; et
- à partir d'essais (réels ou en simulation), on peut déterminer, pour un certain nombre de valeurs de chacun des paramètres intervenant dans la fonction f, la valeur de la courbure c de la trajectoire au sol de l'aéronef, par exemple sous forme d'un tableau à plusieurs entrées, ou d'une série de tableaux à plusieurs entrées.

Puis, dans un deuxième temps, on inverse cette fonction f (qu'elle soit analytique ou exprimée sous forme de tableau) de manière à obtenir une relation entre la pression commandée P et en particulier c, Vsol, Gf, Gpn, Gpi :

$$P = f^{-1}(c, Vsol, Gf, Gpn, Gpi) \text{ et } P \geq 0$$

En outre, lesdits moyens 52 ont pour fonction de répartir la pression commandée P reçue desdits moyens 50, à gauche (PsG) ou à droite (PsD), en fonction de la courbure c fournie par les moyens 36. Lesdits moyens 52 réalisent cette répartition, conformément aux relations suivantes :

- si c > 0, PsG=P et PsD=0 ;
- si c < 0, PsG=0 et PsD=P ; et
- si c=0, PsG=PsD=0

En outre, lesdits moyens 55 ont pour fonction :

- de limiter les ordres de pression à gauche et à droite à transmettre ; et
- d'ajouter, le cas échéant, des ordres de pression issus des pédales de frein 14, afin que le pilote conserve la capacité de freiner symétriquement et manuellement l'aéronef. Pour ce faire, lesdits moyens 55 peuvent recevoir par l'intermédiaire d'une liaison 15A l'ordre de pression PfG de la pédale de frein de gauche, et par l'intermédiaire d'une liaison 15B l'ordre de pression PfD de la pédale de frein de droite, lesdites liaisons 15A et 15B faisant partie de la liaison 15 de la figure 1.

Les ordres (PsG, PsD) issus des moyens 52 sont sommés respectivement avec les ordres de pression (PfG, PfD) des pédales de frein (tout deux toujours positifs ou nuls) selon les relations suivantes :

$$\begin{cases} PiG = PsG + PfG \\ PiD = PsD + PfD \end{cases}$$

Les ordres PiG et PiD issus de cette sommation sont limités respectivement par des fonctions, dont la valeur dépend de la pression maximale admissible par les freins Pmax et des ordres de pression PsG et PsD. Les ordres (finaux) de pression (commandée) à gauche et à droite (tout deux toujours positifs ou nuls) PcG et PcD (qui sont transmis respectivement par les liaisons 11A et 11B), sont obtenus à l'aide des relations suivantes :

$$\begin{cases} PcG = PiG \text{ si } PiG < Pmax - \lambda.PsD \\ PcG = Pmax - \lambda.PsD, \text{ si } PiG \geq Pmax - \lambda.PsD \end{cases}$$

$$\begin{cases} PcD = PiD, \text{ si } PiD < Pmax - \lambda.PsG \\[2em] PcD = Pmax - \lambda.PsG \text{ si } PiD \geq Pmax - \lambda.PsG \end{cases}.$$

dans lesquelles $\lambda$ est un facteur de pondération compris entre 0 et 1.

Plus précisément :

- pour $\lambda$ égal 0, on privilégie le contrôle longitudinal (diminution de la vitesse par freinage maximal) sur le contrôle latéral (l'aéronef ne peut plus tourner par freinage dissymétrique, si les pédales de frein sont complètement défléchies) ;
- pour $\lambda$ égal 1, on privilégie le contrôle latéral (pleine autorité de la vitesse de lacet) sur le contrôle longitudinal (le pilote ne peut pas freiner davantage l'aéronef tant que le volant est braqué à fond par exemple) ; et
- une valeur de $\lambda$ intermédiaire (entre 0 et 1) permet d'obtenir un compromis entre la saturation des actionneurs et le contrôle latéral.

**Revendications**

1. Procédé de pilotage latéral d'un aéronef roulant au sol, ledit aéronef étant muni d'une roulette avant orientable, procédé selon lequel :

   - on engendre, à l'aide de moyens de génération d'ordres (2), des ordres de commande relatifs à la commande de l'orientation de ladite roulette avant ;
   - on mesure une vitesse sol courante de l'aéronef ;
   - à partir desdits ordres de commande reçus à une étape a) et de ladite vitesse sol courante mesurée reçue à une étape b), on détermine automatiquement, à une étape c), des premiers ordres pour un ensemble de freins (E1) de l'aéronef ledit ensemble (E1) étant susceptible d'engendrer un mouvement latéral de l'aéronef autour d'un axe vertical par l'intermédiaire d'une action dissymétrique, et, à une étape d) ultérieure, on applique automatiquement audit ensemble (E1) lesdits premiers ordres ;
   - on surveille automatiquement un système d'orientation (19) destiné à orienter ladite roulette avant de manière à pouvoir détecter une panne de ce système d'orientation (19) ;
   - tant qu'aucune panne n'a été détectée, on applique automatiquement lesdits ordres de commande engendrés à l'aide desdits moyens de génération d'ordres (2) audit système d'orientation (19) de la roulette avant et on ne met pas en oeuvre lesdites étapes a) à d) ; et
   - dès qu'une panne est détectée, on met en oeuvre automatiquement lesdites étapes a) à d) de manière à engendrer sur l'aéronef un mouvement latéral qui est sensiblement identique au mouvement latéral qu'aurait engendrée l'application desdits ordres de commande à ladite roulette avant, et on n'applique pas lesdits ordres de commande audit système d'orientation (19) de la roulette avant ; et
   - à l'étape c) :

     c1) on calcule un angle d'orientation de la roulette avant, qui est représentatif desdits ordres de commande ;
     c2) on calcule la courbure courante d'une trajectoire de l'aéronef telle qu'elle serait si ladite roulette avant était orientée suivant ledit angle d'orientation ; et
     c3) à partir au moins de ladite courbure courante et de ladite vitesse sol courante mesurée, on calcule lesdits premiers ordres, en réalisant les opérations suivantes :

       . on calcule, à partir de ladite courbure courante et de ladite vitesse sol courante mesurée, une pression commandée ;
       . on détermine, à partir de ladite courbure courante et de ladite pression commandée, des ordres de pression intermédiaires PsG et PsD à appliquer respectivement à gauche et à droite ; et
       . on calcule, à partir de ces ordres de pression intermédiaires PsG et PsD, des ordres de pression PcG et PcD qui représentent des premiers ordres destinés à un ensemble de freins (E1) et qui doivent être appliqués respectivement aux freins agissant sur le côté gauche et aux freins agissant sur le côté droit de l'aéronef, lesdits ordres de pression PcG et PcD étant calculés à l'aide des relations suivantes :

$$\begin{cases} PcG = PiG, \text{ si } PiG < Pmax - \lambda.PsD \\ PcG = Pmax - \lambda.PsD, \text{ si } PiG \geq Pmax - \lambda.PsD \end{cases}$$

$$\begin{cases} PcD = PiD, \text{ si } PiD < Pmax - \lambda.PsG \\ PcD = Pmax - \lambda.PsG, \text{ si } PiD \geq Pmax - \lambda.PsG \end{cases}$$

dans lesquelles :
. $\lambda$ est un facteur de pondération ;
. Pmax est une pression maximale admissible par les freins ;
. PiG est un ordre de pression obtenu en sommant l'ordre de pression intermédiaire PsG et un ordre de pression de la pédale de frein gauche ; et
. PiD est un ordre de pression obtenu en sommant l'ordre de pression intermédiaire PsD et un ordre de pression de la pédale de frein droite.

**2.** Procédé selon la revendication 1,
**caractérisé en ce qu'**à l'étape c2), on calcule ladite courbure courante c à l'aide de l'expression suivante :

$$c = tg\beta/L$$

dans laquelle :

- $\beta$ est l'angle d'orientation de la roulette avant, calculé à l'étape c1) ;
- L est l'empattement longitudinal de l'aéronef ; et
- tg représente la tangente.

**3.** Procédé selon l'une des revendications 1 et 2,
**caractérisé en ce que** :

- on reçoit un ordre global de commande du moment de lacet de l'aéronef roulant au sol ;
- on répartit automatiquement cet ordre global en ordres de commande relatifs à la commande de l'orientation de la roulette avant et en ordres auxiliaires ;
- pour lesdits ordres de commande relatifs à la commande de l'orientation de la roulette avant, on met en oeuvre lesdites étapes a) à d) ; et
- on applique automatiquement lesdits ordres auxiliaires à des moyens auxiliaires (33) susceptibles d'agir sur le mouvement latéral de l'aéronef.

**4.** Procédé selon l'une quelconque des revendications précédentes, **caractérisé en ce que** :

- on reçoit, de plus, des seconds ordres pour commander au moins l'un desdits ensembles de commande ;
- on détermine à partir de ces seconds ordres et desdits premiers ordres des ordres globaux ; et
- à l'étape d), on applique audit ensemble de commande lesdits ordres globaux obtenus à partir desdits premiers et seconds ordres.

**5.** Procédé selon l'une quelconque des revendications précédentes, **caractérisé en ce qu'**à l'étape d), avant d'appliquer lesdits premiers ordres à au moins l'un desdits ensembles de commande, on limite ces premiers ordres à des valeurs maximales si elles sont supérieures à ces dernières.

**6.** Procédé selon l'une quelconque des revendications précédentes, **caractérisé en ce qu'**à l'étape c), on détermine des premiers ordres comprenant des ordres pour ledit ensemble de freins (E1) et des ordres pour ledit ensemble de moteurs (E2), et **en ce qu'**à l'étape d), on applique ces ordres respectivement audit ensemble de freins (E1) et audit ensemble de moteurs (E2).

7. Dispositif de pilotage latéral d'un aéronef roulant au sol, qui est muni d'une roulette avant orientable, ledit dispositif (1) comportant :

- des moyens (2) pour engendrer des ordres de commande relatifs à la commande de l'orientation de ladite roulette avant ;
- des moyens (3) pour mesurer une vitesse sol courante de l'aéronef ;
- une unité de calcul (4) pour déterminer automatiquement, à partir desdits ordres de commande et de ladite vitesse sol courante, des premiers ordres pour un ensemble de freins (E1) de l'aéronef ledit ensemble (E1) étant susceptible d'engendrer un mouvement latéral de l'aéronef autour d'un axe vertical par l'intermédiaire d'une action dissymétrique, ladite unité de calcul (4) comportant :

. des moyens (35) pour calculer un angle d'orientation de la roulette avant, qui est représentatif desdits ordres de commande ;
. des moyens (36) pour calculer la courbure courante d'une trajectoire de l'aéronef telle qu'elle serait si ladite roulette avant était orientée suivant ledit angle d'orientation ; et
. des moyens (38) pour calculer lesdits premiers ordres à partir au moins de ladite courbure courante et de ladite vitesse sol courante mesurée, en mettant en oeuvre les opérations suivantes :

calculer, à partir de ladite courbure courante et de ladite vitesse sol courante mesurée, une pression commandée ;
déterminer, à partir de ladite courbure courante et de ladite pression commandée, des ordres de pression intermédiaires PsG et PsD à appliquer respectivement à gauche et à droite ; et
calculer, à partir de ces ordres de pression intermédiaires PsG et PsD, des ordres de pression PcG et PcD qui représentent des premiers ordres destinés à un ensemble de freins (E1) et qui doivent être appliqués respectivement aux freins agissant sur le côté gauche et aux freins agissant sur le côté droit de l'aéronef, lesdits ordres de pression PcG et PcD étant calculés à l'aide des relations suivantes :

$$
\begin{cases}
PcG = PiG, \text{ si } PiG < P\max - \lambda.PsD \\
PcG = P\max - \lambda.PsD, \text{ si } PiG \geq P\max - \lambda.PsD
\end{cases}
$$

$$
\begin{cases}
PcD = PiD, \text{ si } PiD < P\max - \lambda.PsG \\
PcD = P\max - \lambda.PsG, \text{ si } PiD \geq P\max - \lambda.PsG
\end{cases}
$$

dans lesquelles :

. $\lambda$ est un facteur de pondération ;
. Pmax est une pression maximale admissible par les freins ;
. PiG est un ordre de pression obtenu en sommant l'ordre de pression intermédiaire PsG et un ordre de pression de la pédale de frein gauche ; et
. PiD est un ordre de pression obtenu en sommant l'ordre de pression intermédiaire PsD et un ordre de pression de la pédale de frein droite ;

- des moyens (7) pour appliquer automatiquement lesdits premiers ordres audit ensemble de freins (E1) ; et
- un système de surveillance (23) pour surveiller automatiquement un système d'orientation (19) destiné à orienter ladite roulette avant de manière à pouvoir détecter une panne de ce système d'orientation (19), ledit dispositif (1) étant formé de sorte que :

. tant qu'aucune panne n'est détectée par ledit système de surveillance (23), ledit dispositif (1) applique automatiquement les ordres de commande engendrés par lesdits moyens de génération d'ordres (2) à la roulette avant via ledit système d'orientation (19), et la mise en oeuvre de l'unité de calcul (4) est inhibée ; et
. dès qu'une panne est détectée par ledit système de surveillance (23), le dispositif (1) met en oeuvre le contrôle latéral à l'aide de l'unité de calcul (4) de manière à engendrer sur l'aéronef un mouvement latéral qui est sensiblement identique au mouvement latéral qu'aurait engendrée l'application desdits ordres de commande à ladite roulette avant, et le système d'orientation (19) n'applique plus les ordres de commande engendrés par les moyens (2) à la roulette avant.

**Claims**

1. A method for a lateral control of a taxiing aircraft, said aircraft being provided with an orientable front wheel, a method wherein:

   - through order generating means (2), command orders are generated relating to controlling the orientation of said front wheel;
   - a current ground speed of the aircraft is measured; and
   - from said command orders received at a step a) and said measured current ground speed received at a step b), at a step c) first orders are automatically determined for a set of brakes (E1), said assembly (E1) of the aircraft being able to generate a lateral movement of the aircraft around a vertical axis by means of an asymmetrical action, and, at a subsequent step d), said first orders are automatically applied to said assembly (E1);
   - an orientation system (19) is automatically monitored intended to orient said front wheel so as to be able to detect a breakdown of such an orientation system (19);
   - as long as no breakdown has been detected, said command orders are automatically generated by means of said order generating means (2) to said orientation system (19) of the front wheel and said steps a) to d) are not implemented; and
   - as soon as a breakdown is detected, said steps a) to d) are automatically implemented so as to generate on the aircraft a lateral movement being substantially identical to the lateral movement that would have been generated by the application of said command orders to said front wheel, and said command orders are not applied to said system of orientation (19) of the front wheel;
   - at step c):

     c1) an orientation angle is calculated of the front wheel, being representative of said command orders;
     c2) the current curve of a trajectory of the aircraft is calculated such as it would be if said front wheel was oriented according to said orientation angle; and
     c3) from at least said current curve and said measured current ground speed, said first orders are calculated, with the aid of the following operations:

   • a controlled pressure is calculated, from said current curve and said measured current ground speed;
   • from said current curve and said controlled pressure, intermediary pressure orders PsG and PsD are determined to be applied respectively to the left and to the right;
   • from such intermediary pressure orders PsG and PsD, pressure orders PcG et PcD are calculated, representing first orders for a set of brakes (E1) and that are to be applied respectively to the brakes acting on the left side and to the brakes acting on the right side of the aircraft, said pressure orders PcG and PcD being calculated by means of the following relationships:

$$\begin{cases} PcG = PiG, \text{if } PiG < P\max - \lambda.PsD \\ PcG = P\max - \lambda.PsD, \text{if } PiG \geq P\max - \lambda.PsD \end{cases}$$

$$\begin{cases} PcD = PiD, \text{if } PiD < P\max - \lambda.PsG \\ PcD = P\max - \lambda.PsG \text{ if } PiD \geq P\max - \lambda.PsG \end{cases}$$

wherein:

• λ is a weighting factor;
• Pmax is a maximum pressure tolerated by the brakes;
• PiG is a pressure order obtained summing the intermediary pressure order PsG and a pressure order of the left brake pedal; and
• PiD is a pressure order obtained summing the intermediary pressure order PsD and a pressure order of the right brake pedal.

2. A method according to claim 1 **characterized in that** at step c2), said current curve c is calculated by means of the following expression:

$$c = tg\ \beta / L$$

wherein:

- β is the orientation angle of the front wheel, calculated at step c1);
- L is the longitudinal wheelbase of the aircraft; and
- tg represents the tangent.

3. A method according to any of claims 1 and 2, **characterized in that**:

- an overall order for controlling the yaw moment of the taxiing aircraft is received;
- such an overall order is automatically distributed into command orders relating to the control of the orientation of the front wheel and into auxiliary orders;
- for said command orders, said steps a) to d) are implemented; and
- said auxiliary orders are automatically applied to auxiliary means (33) adapted to act on the lateral movement of the aircraft.

4. A method according to any of preceding claims, **characterized in that**:

- in addition, second orders are received for controlling at least one of said command assemblies;
- overall orders are determined from such second orders and said first orders; and
- at step d), said overall orders obtained from said first and second orders are applied to said command assembly.

5. A method according to any of preceding claims, **characterized in that** at step d), before applying said first orders to at least one of said command assemblies, such first orders are limited to maximum values if they are higher than the latter.

6. A method according to any preceding claims, **characterized in that** at step c), first orders are determined comprising orders for said set of brakes (E1) and orders for said set of engines (E2), and **in that** at step d), such orders are applied respectively to said set of brakes (E1) and to said set of engines (E2).

7. A device for a lateral control of a taxiing aircraft, being provided with a orientable front wheel, said device (1) comprising:

- means (2) for generating command orders relating to the control of the orientation of said front wheel;
- means (3) for measuring a current ground speed of the aircraft; and
- a calculation unit (4) for automatically determining, from said command orders and said current ground speed, first orders for a set of brakes (E1) of the aircraft, said assembly (E1) being able to generate a lateral movement of the aircraft around a vertical axis by means of an asymmetrical action, said calculation unit (4) comprising:

• means (35) for calculating an angle of orientation of the front wheel, being representative of said command orders;
• means (36) for calculating the current curve of a trajectory of the aircraft such as it would be if said front wheel was oriented according to said orientation angle; and

• means (38) for calculating said first orders from at least said current curve and said measured current ground speed, at least with the aid of the following operations:

* a controlled pressure is calculated, from said current curve and said measured current ground speed;
* from said current curve and said controlled pressure, intermediary pressure orders PsG and PsD are determined to be applied respectively to the left and to the right;
* from such intermediary pressure orders PsG and PsD, pressure orders PcG et PcD are calculated, representing first orders for a set of brakes (E1) and that are to be applied respectively to the brakes acting on the left side and to the brakes acting on the right side of the aircraft, said pressure orders PcG and PcD being calculated by means of the following relationships:

$$\begin{cases} PcG = PiG, \text{if } PiG < P\max - \lambda.PsD \\ PcG = P\max - \lambda.PsD, \text{if } PiG \geq P\max - \lambda.PsD \end{cases}$$

$$\begin{cases} PcD = PiD, \text{if } PiD < P\max - \lambda.PsG \\ PcD = P\max - \lambda.PsG \text{ if } PiD \geq P\max - \lambda.PsG \end{cases}$$

wherein:

• $\lambda$ is a weighting factor;
• Pmax is a maximum pressure tolerated by the brakes;
• PiG is a pressure order obtained summing the intermediary pressure order PsG and a pressure order of the left brake pedal; and
• PiD is a pressure order obtained summing the intermediary pressure order PsD and a pressure order of the right brake pedal; and

- means (7) for automatically applying said first orders to at least one of said brake assembly (E1) ; and
- a monitoring system (23) for automatically monitoring an orientation system (19) adapted for orienting said front wheel so as to be able to detect a breakdown of such an orientation system (19),
said device (1) being formed such that:

• as long as no breakdown is detected by said monitoring system (23), said device (1) automatically applies the command orders generated by said order generating means (2) to the front wheel via said orientation system (19), and implementing the calculation unit (4) is inhibited; and
• as soon as a breakdown is detected by said monitoring system (23), the device (1) implements the lateral control by means of the calculation unit (4) so as to generate on the aircraft a lateral movement being substantially identical to the lateral movement that would have been generated by the application of said command orders to said front wheel, and the orientation system (19) no longer applies the command orders generated by the means (2) to the front wheel.

**Patentansprüche**

1. Verfahren zum seitlichen Steuern eines am Boden rollenden Flugzeugs, welches Flugzeug mit einem lenkbaren Bugrad versehen ist, wobei bei diesem Verfahren:

- mit Hilfe von Mitteln zur Erzeugung von Befehlen (2) Steuerbefehle in Bezug auf die Steuerung der Lenkung des Bugrads erzeugt werden;
- eine aktuelle Bodengeschwindigkeit des Flugzeugs gemessen wird;
- ausgehend von den in einem Schritt a) empfangenen Steuerbefehlen und von der in einem Schritt b) empfangenen gemessenen aktuellen Bodengeschwindigkeit, in einem Schritt c) automatisch erste Befehle für eine Bremseinheit (E1) des Flugzeugs bestimmt werden, wobei die Einheit (E1) in der Lage ist, eine seitliche Bewegung des Flugzeugs um eine vertikale Achse herum mit Hilfe eines asymmetrischen Einwirkens zu erzeugen, und, in einem anschließenden Schritt d), an die Einheit (E1) automatisch die ersten Befehle angelegt werden;

- ein Lenksystem (19), das für die Lenkung des Bugrads vorgesehen ist, automatisch überwacht wird, derart, dass eine Störung dieses Lenksystems (19) erkannt werden kann;

- solange keine Störung erkannt wurde, die mit Hilfe der Mittel zur Erzeugung von Befehlen (2) erzeugten Steuerbefehle automatisch an das Lenksystem (19) des Bugrads angelegt werden und die Schritte a) bis d) nicht durchgeführt werden; und,

- sobald eine Störung erkannt wird, die Schritte a) bis d) automatisch durchgeführt werden, derart, dass an dem Flugzeug eine seitliche Bewegung erzeugt wird, die im Wesentlichen identisch mit der seitlichen Bewegung ist, die das Anlegen der Steuerbefehle an das Bugrad erzeugt hätte, und die Steuerbefehle nicht an das Lenksystem (19) des Bugrads angelegt werden; und

- in Schritt c)

c1) ein Lenkungswinkel des Bugrads, der repräsentativ für die Steuerbefehle ist, berechnet wird;

c2) die aktuelle Krümmung einer Bahn des Flugzeugs so berechnet wird, wie sie wäre, wenn das Bugrad unter dem Lenkungswinkel gelenkt wäre; und

c3) ausgehend von mindestens der aktuellen Krümmung und der gemessenen aktuellen Bodengeschwindigkeit die ersten Befehle berechnet werden, indem die folgenden Arbeitsgänge durchgeführt werden:

. ausgehend von der aktuellen Krümmung und der gemessenen aktuellen Bodengeschwindigkeit wird ein gesteuerter Druck berechnet;

. ausgehend von der aktuellen Krümmung und dem gesteuerten Druck werden Zwischendruckbefehle PsG und PsD bestimmt, die links bzw. rechts aufzubringen sind; und

. ausgehend von diesen Zwischendruckbefehlen PsG und PsD werden Druckbefehle PcG und PcD berechnet, die erste Befehle darstellen, die für eine Bremseinheit (E1) bestimmt sind, und die an die Bremsen, die auf die linke Seite einwirken, bzw. an die Bremsen, die auf die rechte Seite des Flugzeugs einwirken, angelegt werden müssen, wobei die Druckbefehle PcG und PcD mit Hilfe der folgenden Gleichungen berechnet werden:

$$\begin{cases} PcG = PiG, \text{ wenn } PiG < Pmax - \lambda.PsD \\ PcG = Pmax - \lambda.PsD, \text{ wenn } PiG \geq Pmax - \lambda.PsD \end{cases}$$

$$\begin{cases} PcD = PiD, \text{ wenn } PiD < Pmax - \lambda.PsG \\ PcD = Pmax - \lambda.PsG, \text{ wenn } PiD \geq Pmax - \lambda.PsG \end{cases}$$

wobei:

. $\lambda$ ein Gewichtungsfaktor ist;

. Pmax ein durch die Bremsen zugelassener Maximaldruck ist;

. PiG ein Druckbefehl ist, der erhalten wird, indem der Zwischendruckbefehl PsG und ein Druckbefehl des linken Bremspedals summiert werden; und

. PiD ein Druckbefehl ist, der erhalten wird, indem der Zwischendruckbefehl PsD und ein Druckbefehl des rechten Bremspedals summiert werden.

2. Verfahren nach Anspruch 1, **dadurch gekennzeichnet, dass** in Schritt c2) die aktuelle Krümmung c mit Hilfe des folgenden Ausdrucks berechnet wird:

$$c = tg\beta/L$$

wobei:

- $\beta$ der Lenkungswinkel des Bugrads ist, der in Schritt c1) berechnet wurde;
- L der Radstand des Flugzeugs in Längsrichtung ist; und
- tg die Tangente darstellt.

3. Verfahren nach einem der Ansprüche 1 und 2, **dadurch gekennzeichnet, dass**:

   - ein Gesamtbefehl zur Steuerung des Giermoments des auf dem Boden rollenden Flugzeugs empfangen wird;
   - dieser Gesamtbefehl automatisch in Steuerbefehle in Bezug auf die Steuerung der Lenkung des Bugrads und in Hilfsbefehle aufgeteilt wird;
   - für die Steuerbefehle in Bezug auf die Steuerung der Lenkung des Bugrads die Schritte a) bis d) durchgeführt werden; und
   - die Hilfsbefehle automatisch an Hilfsmittel (33), die in der Lage sind, auf die seitliche Bewegung des Flugzeugs einzuwirken, angelegt werden.

4. Verfahren nach einem der vorhergehenden Ansprüche, **dadurch gekennzeichnet, dass**

   - ferner zweite Befehle empfangen werden, um mindestens eine der Steuereinheiten zu steuern;
   - ausgehend von diesen zweiten Befehlen und den ersten Befehlen Gesamtbefehle bestimmt werden; und
   - in Schritt d) die ausgehend von den ersten und zweiten Befehlen erhaltenen Gesamtbefehle an die Steuereinheit angelegt werden.

5. Verfahren nach einem der vorhergehenden Ansprüche, **dadurch gekennzeichnet, dass** in Schritt d), vor dem Anlegen der ersten Befehle an mindestens eine der Steuereinheiten, diese ersten Befehle auf Höchstwerte begrenzt werden, sofern sie höher als diese letzten sind.

6. Verfahren nach einem der vorhergehenden Ansprüche, **dadurch gekennzeichnet, dass** in Schritt c) erste Befehle bestimmt werden, die Befehle für die Bremseinheit (E1) und Befehle für die Antriebseinheit (E2) umfassen, und dass in Schritt d) diese Befehle an die Bremseinheit (E1) bzw. an die Antriebseinheit (E2) angelegt werden.

7. Vorrichtung zum seitlichen Steuern eines am Boden rollenden Flugzeugs, das mit einem lenkbaren Bugrad versehen ist, wobei die Vorrichtung (1) Folgendes aufweist:

   - Mittel (2), um Steuerbefehle in Bezug auf die Steuerung der Lenkung des Bugrads zu erzeugen;
   - Mittel (3), um die aktuelle Bodengeschwindigkeit des Flugzeugs zu messen;
   - eine Rechnereinheit (4), um, ausgehend von den Steuerbefehlen und der aktuellen Bodengeschwindigkeit, erste Befehle für eine Bremseinheit (E1) des Flugzeugs zu bestimmen, wobei die Einheit (E1) in der Lage ist, eine seitliche Bewegung des Flugzeugs um eine vertikale Achse herum mit Hilfe eines asymmetrischen Einwirkens zu erzeugen, wobei die Rechnereinheit (4) Folgendes aufweist:

     . Mittel (35) um einen Lenkungswinkel des Bugrads, der repräsentativ für die Steuerbefehle ist, zu berechnen;
     . Mittel (36), um die aktuelle Krümmung einer Bahn des Flugzeugs so zu berechnen, wie sie wäre, wenn das Bugrad unter dem Lenkungswinkel gelenkt wäre; und
     . Mittel (38), um ausgehend von mindestens der aktuellen Krümmung und der gemessenen aktuellen Bodengeschwindigkeit die ersten Befehle zu berechnen, indem die folgenden Arbeitsgänge durchgeführt werden:

       - Berechnen, ausgehend von der aktuellen Krümmung und der gemessenen aktuellen Bodengeschwindigkeit, eines gesteuerten Drucks;
       - Bestimmen, ausgehend von der aktuellen Krümmung und dem gesteuerten Druck, von Zwischendruckbefehlen PsG und PsD, die links bzw. rechts aufzubringen sind; und
       - Berechnen, ausgehend von diesen Zwischendruckbefehlen PsG und PsD, von Druckbefehlen PcG und PcD, die erste Befehle darstellen, die für eine Bremseinheit (E1) bestimmt sind, und die an die Bremsen, die auf die linke Seite einwirken, bzw. an die Bremsen, die auf die rechte Seite des Flugzeugs einwirken, angelegt werden müssen, wobei die Druckbefehle PcG und PcD mit Hilfe der folgenden Gleichungen berechnet werden:

$$PcG = PiG, \text{ wenn } PiG < Pmax - \lambda.PsD$$

$$PcG = Pmax - \lambda.PsD, \text{ wenn } PiG \geq Pmax - \lambda.PsD$$

$$PcD = PiD, \text{ wenn } PiD < Pmax - \lambda.PsG$$
$$PcD = Pmax - \lambda.PsG, \text{ wenn } PiD \geq Pmax - \lambda.PsG$$

wobei:

. $\lambda$ ein Gewichtungsfaktor ist;
. Pmax ein durch die Bremsen zugelassener Maximaldruck ist;
. PiG ein Druckbefehl ist, der erhalten wird, indem der Zwischendruckbefehl PsG und ein Druckbefehl des linken Bremspedals summiert werden; und
. PiD ein Druckbefehl ist, der erhalten wird, indem der Zwischendruckbefehl PsD und ein Druckbefehl des rechten Bremspedals summiert werden;

- Mittel (7), um die ersten Befehle automatisch an die Bremseinheit (E1) anzulegen; und
- ein Überwachungssystem (23), um ein Lenksystem (19), das für die Lenkung des Bugrads vorgesehen ist, automatisch zu überwachen, derart, dass eine Störung dieses Lenksystems (19) erkannt werden kann; wobei die Vorrichtung (1) dergestalt gebildet ist, dass:

. solange keine Störung durch das Überwachungssystem (23) erkannt wird, die Vorrichtung (1) die durch die Mittel zur Erzeugung von Befehlen (2) erzeugten Steuerbefehle über das Lenksystem (19) automatisch an das Bugrad anlegt und die Ausführung der Rechnereinheit (4) gehemmt wird; und,
. sobald eine Störung durch das Überwachungssystem (23) erkannt wird, die Vorrichtung (1) die seitliche Steuerung mit Hilfe der Rechnereinheit (4) durchführt, derart, dass an dem Flugzeug eine seitliche Bewegung erzeugt wird, die im Wesentlichen identisch mit der seitlichen Bewegung ist, die das Anlegen der Steuerbefehle an das Bugrad erzeugt hätte, und das Lenksystem (19) die durch die Mittel (2) erzeugten Steuerbefehle nicht mehr an das Bugrad anlegt.

Fig. 1

Fig. 2

Fig. 3

Fig. 4

EP 2 260 359 B1

EP 2 260 359 B1

Fig. 5

**RÉFÉRENCES CITÉES DANS LA DESCRIPTION**

**Documents brevets cités dans la description**

- FR 2898334
- EP 1477872 A
- US 4482961 A
- FR 2854962